# EUROPEAN PATENT SPECIFICATION

(11) **EP 1 415 724 B1**
(45) Date of publication and mention of the grant of the patent: **07.06.2006**
(21) Application number: 03256607.7
(22) Date of filing: 21.10.2003
(51) Int. Cl.: B05B 15/12, B05B 15/00, B29C 70/00

(54) **Composite structures and spray booth for powder coating systems**
Verbundstruktur und Beschichtungskammer für Pulverbeschichtungsanlagen
Structures composites et cabine de pulvérisation pour systèmes de revêtement en poudre

(30) Priority: 29.10.2002 US 282737
(43) Date of publication of application: 06.05.2004
(73) Proprietor: NORDSON CORPORATION, Westlake, Ohio 44145-1119 (US)
(72) Inventor: Shutic, Jeffrey R., Wakeman Ohio 44889 (US); Jones, Edward L., Strongsville Ohio 44136 (US)
(74) Representative: Findlay, Alice Rosemary

(56) References cited:
- GB-A- 2 345 662
- US-A- 5 112 663
- US-A1- 2002 072 320
- US-B1- 6 331 028
- US-B1- 6 444 073

## Description

This invention relates to a powder spray booth.

The powder which does not adhere to an article to be coated in a powder spray booth is known as the "overspray". Overspray powder may miss the article to be coated, rebound from a surface of the article, or be deflected by the electrostatic fields in the spray booth away from the article.

It is known to recover overspray powder by exhausting the air from the booth and hence the air-borne overspray powder.

In recent years there has been a growing desire to be able to spray multiple colours in a single booth in rapid succession. However, changing powder colour requires cleaning of the booth to remove powder deposited on the walls, ceiling and floor which was not extracted by air exhaustion. Proper cleaning of the walls and floor of the powder spray booth between colour changes is very important to ensure acceptable production quality.
New concepts in spray booth construction are being used to reduce the amount of overspray powder that is attracted or adheres to the spray booth interior surfaces. A major advance in this technology of low conductivity wall structures is described in PCT application number WO 01/78905 and US 6 444 073. In brief, cored composite wall structures are used that exhibit extremely low conductivity and electrostatic properties, thereby minimizing the attraction of electrostatically charged overspray powder particles onto the surface of the wall. In contrast to thermoplastic type spray booths, the cored composite walls do not electrostatically attract the overspray powder and are very easy and fast to clean, thereby significantly reducing color change times and improving the transfer ratio of adhered powder to sprayed powder. The cored composite walls are made of resin based materials with reinforcing fibers and a suitable core such as a high density closed cell foam core PVC, for example.

US 2002/0072320 discloses a powder spray booth which includes a booth canopy wall arrangement to contain powder during a spraying operation; and a booth floor that is rotatable relative to the booth wall during a spraying operation. The booth canopy and floor are made of composite materials that are very low in conductivity to minimize powder adhering to the floor and booth walls. The booth is thus easy to clean with a substantially shorter time period required for color change.

The present invention an electrostatic powder spray booth comprising a first cored composite wall and a second cored composite wall, wherein said first and second walls are generally flat panels and are joined to each other along a respective edge to form an included angle, characterised in that the booth further comprises a nonconductive member that is joined to each of said first and second walls to form a mechanical joint therebetween, said nonconductive member covering an otherwise exposed edge of core material of at least one of said walls.

The present invention contemplates various structural elements used to assemble a complete spray booth, including but not limited to non-conductive fasteners, load bearing bushings, and pultruded non-conductive elements to establish mechanical joints. In accordance with the invention, the nonconductive elements may also be used as a cover or protective layer over otherwise exposed foam core ends of the cored composite wall structures.

The invention will now be further described by way of example with reference to the accompanying drawings in which:
Figure 1 is a perspective view partly cut away of a powder booth;
Figure 2 illustrates layers of a cored composite wall structure in exploded view in accordance with the invention.
Figure 3 illustrates a cored composite wall structure having passageways in the core surface to ventilate air during cure;
Figure 4 illustrates a mechanical joint between angled panel sections of a powder booth using a pultruded reinforcing member;
Figures 5A-5B illustrate alternative embodiments of forming a mechanical joint between two cored composite wall structures at an included angle other than 90 or 180 degrees;
Figures 6A-6J illustrate exemplary configurations for joining composite wall structures at about 90 degrees;
Figures 7-8 illustrate load bearing bushing embodiments made of non-conducting materials;
Figure.9 illustrates a pultruded member that forms a mechanical joint between two angled panels;

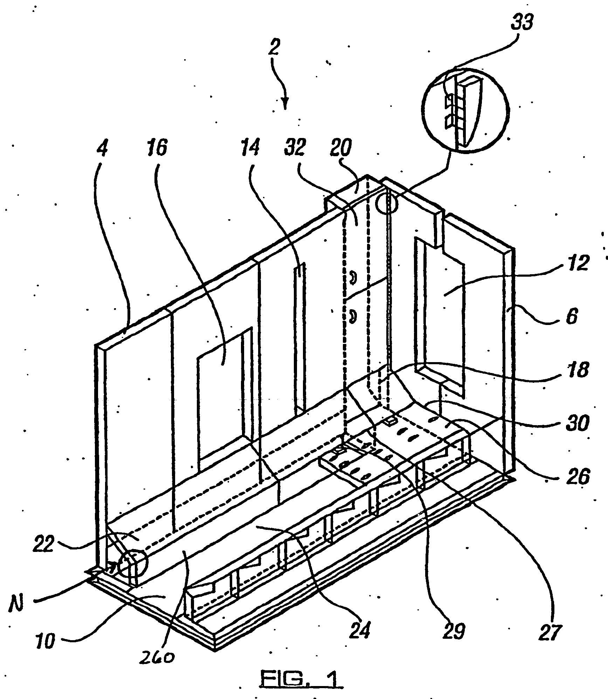

Figure 1 shows a rectangular powder spray booth 2 with side walls 4, end walls 6 and a floor 10. The booth 2 further has a conveyor (not shown) from which objects are suspended and conveyed through the booth 2 via openings 12 in the end walls 6 for coating with powder by a number of spray devices (also not shown). The booth 2 shown in Figure 1 has a slot 14 for an automatic spray device and an opening 16 to allow use of a manually operated spray device in each side wall. However it will be appreciated that the number and position of spray devices can be varied depending on the objects to be coated.

The ceiling, walls 4, 6 and floor 10 of the booth 2 are preferably made from a non-conducting material such as plastic. By using plastic, the powder sprayed by the spray devices if electrostatically charged will have a reduced tendency to adhere to the ceiling and walls 4, 6 since it will not be electrostatically attracted to the walls 4, 6 and ceiling and instead will fall under gravity and collect on the floor 10 of the booth 2. For durability the floor 10 or at least the part or parts on which an operator will walk may instead be made of stainless steel.

The booth 2 will be provided with a powder recovery system which may include filters and/or one or more cyclone separators as further described below with respect to other embodiments of the powder coating system. Whatever form the powder recovery system takes, there will be an overspray intake communicating with the interior of the booth 2 and providing a current of exhaust air within the booth and into the overspray intake. The current of exhaust air will serve to extract airborne overspray powder. The skilled man can readily choose a suitable powder recovery system from those known in the art.

As rectangular powder spray booths are preferably cleaned from one end to the other, for the purposes of cleaning the overspray intake is preferably located at one end of the booth. In the booth depicted in Figure 1, the overspray intake is shown in dotted outline at 18 and is located at one corner of the booth. Rising thereabove is a duct 20 which leads to the powder recovery system which is preferably a powder recovery system of the type styled "close coupled cyclone" as described in European Patent Application No. 94929600.8, now European Patent No. 723,481.

The floor 10 of the booth 2 shown in Figure 1 includes two sloping portions 22 on either side thereof, the sloping portions 22 being spaced and the remainder of the floor 10 being offset therefrom to define a trough 24 between the sloping portions 22. The wall of the trough 24 is cut away at the end of the booth 2 where the overspray intake 18 is located to provide a connection between the overspray intake 18 and the trough 24 and hence the rest of the interior of the booth 2.

A diverter plate 26 is positioned in the trough 24 at the end where the overspray intake 18 is located and extends from that end. The length of the diverter plate 26 is preferably equal to the distance from the end of the booth 2 to the centre line of the automatic spray device slot 14 which is furthest from that end plus an offset. The offset may suitably be of the order of 200 mm. The plate 26 is suitably spaced from the side portions 22 to define slots 27 therebetween.

The diverter plate 26 is supported by tabs 29 in the position shown in Figure 1 but is mounted to the end wall 6 via hinges 30 to allow it to be pivoted up and against the end wall 6. The portion of duct 20 extending above the side floor portions 22 is separated from the interior of the booth 2 by two doors 32 each of which is also mounted by hinges 33 so that the doors 32 can also be pivoted away against the end wall 6 allowing access to the interior of the duct 20.

With the diverter plate 26 installed over the trough 24, a floor duct is formed by the diverter plate 26 and the trough structure whereby overspray powder is drawn into the floor duct through the holes 28 and the slots 27. The overspray powder is drawn by the powder recovery system air flow suction into and through the floor duct and into the vertical duct 20 through the overspray intake 18.

In use, the booth 2 is employed to spray powder on to objects passing therethrough either from automatic guns extending through the slots 14 and/or by manual guns directed through the openings 16. Air borne overspray powder is extracted from the interior of the booth 2 on the current of exhaust air produced by the powder recovery system via the overspray extract 18 and duct 20. Overspray powder which falls out of the transport air provided by the powder recovery system will be deposited on the floor 10 of the booth 2 and so on the side portions 22, the bottom of the trough 24 and the plate 26. The flow of exhaust air caused by the air recovery module along the trough 24 will tend to draw deposited overspray powder on the upper surface of the diverter plate 26 down into the trough 24 therebelow either through the holes or the slots 27 between the side portions 22 and the diverter plate 26.

The cleaning operation which is performed when the colour of the powder is to be changed will now be described. It will be appreciated that the description applies equally to the other embodiments provided with a diverter plate 26 and a powder recovery system which provides for air exhaust. The powder spray devices are shut off and doors closed across the access openings 12 in the end wall 6. The diverter panel 26 is pivoted up against the adjacent end wall 6 as too are the doors 32 to the vertical duct 20. An operator preferably using an air hose, begins at the opposite end of the booth 2 from the vertical duct 20 and moves along the booth blowing the deposited overspray powder which remains therein from all wall and floor surfaces including the sloped floor surfaces and the surfaces of the diverter panel 26, the floor duct, the vertical duct 20 and the overspray intake 18. The operator may open each diverter panel individually as he walks along the length of the booth so that the floor duct will still transport the blown off powder to the overspray intake, the vertical duct and the powder recovery system. These last two operations are simplified because of the hinged mounting of the diverter panel 26 and the doors 32 of the vertical duct 20. As the powder is blown off of the surfaces of the booth, it is drawn into the extraction duct 20 by the fan.

The amount of deposited overspray powder which has to be removed in this operation is much less than with known booths because a significant proportion of the deposited overspray powder will have already been removed due to the action of the diverter plate 26, sloped side portions 22 and the air plenums 34. Consequently the amount of recycling work to be done during the cleaning process is reduced which reduces labour costs. Also, in some prior systems, powder has to be collected in a dust pan or waste container and thrown away because recycling has not been completed by the time the cleaning process is over. This waste of powder coating material will not occur in the present system due to the reduced time and effort required to clean the booth.

In tests with this booth, it has been found to be possible to reduce booth cleaning time to below fifteen minutes.

These improvements in colour change capability are achieved whilst at the same time improving the actual performance of the booth since the diverter plate 26 acts to even out, or balance across the length of the booth the air flows which draw oversprayed powder into the system. This has the effect of improving the transfer efficiency of the guns because the powder particles have a better opportunity to attach to the part being coated. In addition, oversprayed powder is more effectively contained within the booth by means of this design.

Spray booth cleaning and color change times can be significantly reduced by using spray booth wall structures made of non-conductive cored composite materials. The non-conductive nature of the cored composite wall structure eliminates electrostatic attraction between the overspray powder particles and the interior or functional surface of the spray booth walls. This improves the powder application environment by improving the transfer of powder sprayed from the spray gun to the object being sprayed (improved transfer ratio) because the spray booth itself does not significantly attract powder particles. Thus, the benefits of a cored composite wall structure may be realized with spray booths that are designed for quick change color operations as well as spray booth designs wherein color change times are not a primary focus.

As used herein the term "wall" is used in its broadest sense to include but not be limited to vertical walls, panels, doors, plates, ducts, covers, floors, ceilings and so on. The cored composite wall structure may be used with any desired spray booth configuration, not just the exemplary designs described herein. The cored composite structures are especially useful in making enclosures and structures used with electrostatic application systems such as electrostatic powder spray booths as described herein; however, such description is intended to be exemplary in nature and should not be construed in a limiting sense. For example, they may also be used for non-powder application systems as well as non-electrostatic application systems.

Although the described embodiments herein relate to a spray booth enclosure and structural panels and walls therefor, the cored composite structures may be used for many different parts of such an enclosure, including but not limited to spray booth walls, feed hoppers, color module housings such as for powder recovery systems, cyclones, after filters and so on.

Preferably, a cored composite wall structure is provided that is characterized by a first skin layer made of fiber reinforced thermoset resin materials, a second skin layer made of fiber reinforced thermoset resin materials, and a core sandwiched or positioned between the first and second skin layers. One of the skin layers forms a functional side or surface of the cored composite wall, meaning that the functional side is exposed to overspray powder such as occurs within a spray booth interior. The opposite skin layer forms a non-functional side or outer surface of the spray booth.

By "composite" structure is meant that the structure includes a generally homogenous material created by the synthetic assembly of two or more materials (typically a selected filler, hardener or reinforcing elements and a compatible matrix binder) to obtain specific characteristics and properties. Typical examples and not by way of limitation would be a two part resin based encapsulating material such as an epoxy resin (unreinforced) and glass fiber reinforced resins such as fiberglass materials.

By "cored" composite structure simply means that the structure includes a structural core material disposed between two composite skins or layers. Typically the core will be integrally bonded to the skins or layers with a suitable thermoset encapsulating or bonding material. Preferably but not necessarily the encapsulating material comprises a resin that is the same as the composite layer resin.

By "thermoset" is meant that the material when cured by the application of heat or chemical reaction, changes into a substantially infusible and insoluble state. An epoxy resin is again a typical example of a thermoset material by which the epoxy resin and the hardener cure when brought into contact with each other into a hardened matrix that is not reversed by application of heat.

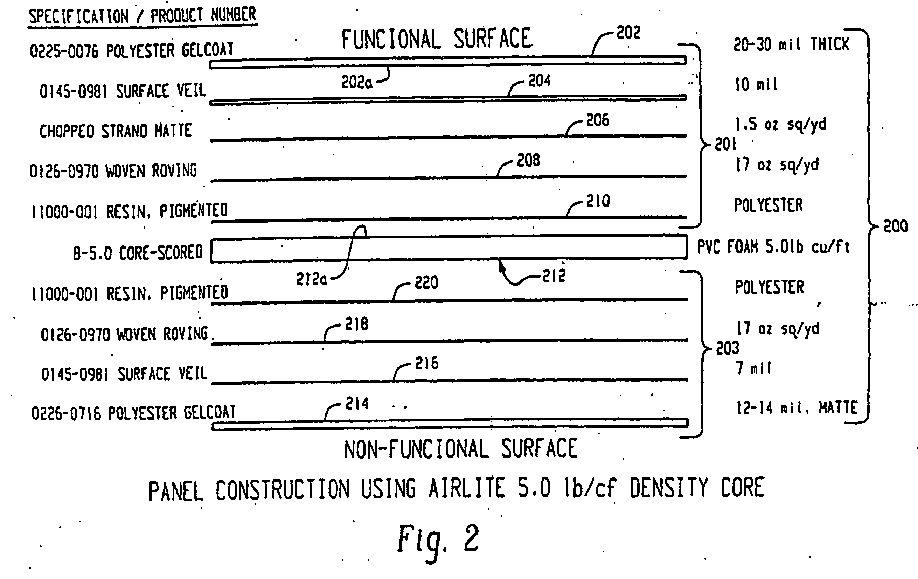

With reference to Figure 2, an exemplary embodiment of a cored composite wall structure 200 is illustrated in exploded form. The layers are illustrated as they would be laid up in a suitable tooling arrangement as will be described further herein. Many of the materials and alternative materials used in the cored composite wall structure 200 are fully described in the above referenced PCT publication WO 01/78905 and reference may be made to that document for additional details.

The cored composite wall structure 200 has a first or inner skin layer 201, a second or outer skin layer 203 and a sandwiched core 212. The inner skin layer 201 includes a first layer 202 that forms the inner surface of a wall section that is part of a spray booth, and hence is referred to as being on the functional side of the wall structure 200. The first layer 202 is an unreinforced two component resin layer such as a polyester gelcoat which forms a smooth interior surface. The gelcoat layer 202 may be any suitable thickness, in this illustrated case 0.02 to 0.03 inches (0.051 to 0.076cm). The gelcoat layer 202 may also be suitably pigmented for aesthetic appearance. The smooth hard white surface is easier for workers to see oversprayed powder that is adhering to booth interior canopy surfaces which must be cleaned during a color change operation. The gelcoat layer 202 forms a durable interior surface that is impervious to moisture adsorption and does not degrade over time or due to ultraviolet light. In addition, it is impact and scratch resistant and scratches that do form can be easily buffed out. Suitable resins for the gelcoat layer 202 in an electrostatic powder spraying environment are those that cure into non-conductive, resilient, moisture impervious layers, such as an epoxy based resin system, polyester or a vinylester resin system. Derakane 441 400 from Dow Corporation, and COREZYN VEX 169 540, from Interplastic Corp. of St. Paul, Minnesota, are exemplary of suitable vinylester resins for this purpose. A pigmented version may also be suitable for the gelcoat layer.

The second layer 204 is an optional surface veil made of nonwoven E-glass reinforcing fibers. The surface veil 204 is used primarily for improving aesthetic appearance by preventing print through of underlying layers. The surface veil 204 typically is about 0.01 inch (0.025 cm) thick though any suitable thickness may be used, and is available from Owens Coming. The glass fibers in a veil are longer in general and are dispersed in a swirled fashion within the veil and typically are held in a binder that is soluble in the encapsulating resin of the composite structure.

The third layer 206 is an optional non-woven chopped strand mat. Chopped strand mat is a well known random orientation glass fiber composition. Although the chopped strand mat material is a commodity product with various weight densities and manufacturers, a 1.5 ounce (42.525 g) E-glass chopped strand mat from Owens Coming is suitable. The chopped strand mat layer 206 also reduces print through, but further is used as a non conductive reinforcing layer to increase impact and shear resistance strength. The glass fibers in a chopped strand mat are typically shorter than in a veil but are also held in a binder that is soluble in the encapsulating resin.

The fourth layer 208 is optional and is a woven roving of E-glass reinforcing fibers, such as for example, 17 ounce woven roving available from Brunswick Technologies, Inc. The woven roving layer 208 may be used for added shear strength and impact resistance.

It is noted that the various glass reinforcing layers used in the exemplary embodiment may be chosen based on their weight and fiber orientations in order to have a desired property. For example, the nonwoven veil and chopped strand mat are weakest in terms of reinforcing strength, but are primarily used for appearance and less expensive. The woven roving layer is stronger, but additional options include knitted unidirectional, bidirectional, tridirectional, 45° bidirectional or drop stitched E-glass layers which exhibit increasing degrees of reinforcing strength as listed but also are more expensive. The designer may thus choose the reinforcing layer materials based on the strength, cost and appearance requirements for a specific application.

Besides glass reinforcing fibers, alternatively other reinforcing fiber materials may be used such as S-glass and poly-para-phenylene-terephthalamide, sold under the trade name KEVLAR by DuPont. Carbon fibers, although conductive, may be suitable in some applications since they have very high strength to weight ratios. The reinforcing layers will be chosen based on the booth design, for example, a cored composite wall that will be used as a floor for walking on may require higher reinforcement than a ceiling wall.

For low cost, lower strength applications it may be suitable simply to omit the veil 204 and the reinforcing layer 208. Though not the strongest reinforcing layer materials, the chopped strand mat layer 206 may provide adequate strength in some applications.

A fifth layer 210 of a suitable encapsulating material is provided, prior to cure, between the woven roving layer 208 and the sandwiched core 212. The encapsulating material layer 210 is preferably a two component thermoset polyester, vinylester or epoxy resin system. The encapsulating layer 210 is used to encapsulate the fiber reinforcing layers (in this example, the veil layer 204, the chopped strand mat layer 206 and the woven roving layer 208. The encapsulating layer 210 also establishes bonds between the reinforcing layers and an inner surface 202a of the gelcoat layer 202 and one surface 212a of the core 212.

The encapsulating layer 210 is initially laid up as a separate layer of resin such as polyester. As will be described herein, the resin flows under pressure, vacuum and heat to encapsulate the reinforcing layers, and bond the first skin 201 elements together and to the core 212.

On the non-functional side of the wall structure 200, the second or outer skin 203 includes similar layers as the inner skin 201, except that the chopped strand mat layer is not used since the aesthetic appearance and texture of the outside surface does not require the same surface finish as the functional side. The gelcoat layer may also be made with a reduced thickness.

Accordingly, the outer skin 203 includes a gelcoat layer 214, a surface veil layer 216, a layer of woven roving 218, and an encapsulating layer 220 such as, for example, a polyester resin. These layers may be the same or different as the materials used for the layers in the inner skin 201. Since appearance and surface finish features of the outer skin 203 are less stringent than the inner skin 201, the gelcoat layer 214 and the surface veil 216 may be thinner. The resin layer 220 encapsulates the various layers of the outer skin 203 and bonds the structure to an opposite surface 212b of the core 212.

The core 212 may be selected from any number of a wide variety of materials. Preferably, the core 212 comprises a non-conductive material such as polyvinylchloride (PVC) foam. A suitable material is a semi-rigid, closed cell PVC foam. With the process described below, a lower density PVC foam may be used as compared to the density of the core used in the above referenced patent applications. The ability to use lower density PVC foam represents a significant cost reduction. For example, a PVC foam density as low as about 2.5 pounds/ft³ (40.046 kg/m³) available from BALTEC may be used. Presently, 2.5 pounds/ft³ (40.046 kg/m³) is the commercially available minimum foam density, and it may be that in the future suitable lower density foams will be available. Different wall structures of a spray booth may use different density cores for added strength, such as floor sections. Use of lower density cores allows for use of thicker core dimensions without increasing cost. Also, the gelcoat layer may be thinner when a lower density core is used. For example, in Figure 22 when a core density of about 2.5 pounds/ft³ (40.046 kg/m³) is used, the gelcoat layer 202 may be about 12-14 mils thick. Still further, within a single wall structure the cored composite material may include a variable density distribution. For example, in a panel that will include an opening such as for a door and having to support a hinge, it may be desired to use a higher density core at that location in the panel.

Other suitable core materials include but are not limited to end grain balsa, glass reinforced polyisocyanurate, polyisocyanurate, polyurathane, plywood, polystyrene, syntactic foams, or paper based honeycombs. The selected material will depend on various requirements of a particular application as to moisture content, strength requirements, degree of nonconductivity needed, and so on.

It is noted that for lower cost booth requirements, the first and second skins 201, 203 may be minimalized in terms of the encapsulated layers. The minimum structure for a reinforced inner skin 201 would include the gelcoat layer 202, a chopped strand mat layer 206 and a bonding layer 210 such as a polyester resin. Such a minimal reinforced structure would exhibit an inner surface having a comparatively reduced surface quality and structural strength, but may be appropriate in some low cost applications. The outer skin 203 may similarly be minimized to three layers including the gelcoat layer 214, a chopped strand mat and an encapsulating layer 220.

Still further, the gelcoat layers 202, 214 may optionally be molded directly to the core, although this will reduce the strength of the wall structure compared to a less minimal skin structure, but which still may be suitable in some low cost, low strength applications. In such a case, the core would be relied upon to carry all the mechanical loads with the gelcoat serving as a smooth sealed finished surface.

An exemplary process for forming a cored composite wall structure such as, for example, illustrated in Figure 2 will now be described. Although this process is described in terms of producing flat panel type wall structures, it is contemplated that appropriate tooling can be provided so as to used the process to produce non flat wall structures.

In the exemplary process, the various layers are laid up manually. A platform mold of selected dimensions is used to support the layers. After the various layers are laid up, a pressure plate or other suitable mechanism for applying a compressive load to the layers is positioned over the layers.

The tooling surface used for the functional side may be realized using a sheet of polyester film, such as, for example, film sold under the trade name MYLAR by DuPont, or other suitable material. First, a gelcoat layer is applied to a MYLAR sheet, partially or fully cured, and then the MYLAR/gelcoat material can be rolled up as a layer for subsequent use.

The MYLAR/gelcoat layer is first placed onto the tooling platform, then the rest of the layers of the cored composite structure are laid up. Note that the encapsulating layers are applied during the lay up steps. An additional MYLAR layer is positioned between the top gelcoat layer and the pressure plate.

After the layers are in place, the pressure plate is positioned on top of the layers, and a vacuum bag is used to enclose the materials and tooling. A vacuum is pulled, for, example 25 inches of mercury (84.660 kN/m³), which results in the generation of an evenly distributed compressive load on the materials via the pressure plate. The amount of compression applied will depend on the materials used for the various layers of the cored composite structure. The compressive load and vacuum helps to uniformly distribute the resin bonding material throughout the structure. The vacuum also is used to draw entrapped air from the structure.

Heat may be applied during the vacuum and compression time. Typical temperatures may be about 80 °F (26.67°C) to about 140 °F (60°C) although the actual temperatures will depend on the materials being used and the desired cure time. The use of heat decreases the viscosity of the resin bonding material so that the resin flows more easily throughout the composite structure. Heat also accelerates the curing time for the resin. As a consequence, lower density cores can be used as compared to prior processes because the shorter cure time lessens the effect of styrene attack on the core.

It should be noted that under this process the gelcoat layers 202, 214 separate from the MYLAR tooling surface as it is bonded to the composite structure, because thermoset resins do not bond or adhere to thermoplastic materials such as MYLAR without special additional treatments. The gelcoat layers thus become part of the finished composite structure and the MYLAR separates there from. The MYLAR sheets can then be reused as a tooling surface to produce additional composite structures. MYLAR also produces an exceptionally smooth surface to the gelcoat layer thereby eliminating post cure secondary finishing operations. This smooth micro-finished gelcoat surface produced by the MYLAR tooling surface improves cleanability of the resultant spray booth functional surface as well as the aesthetics and cleanability of the non-functional surface. The process thus produces a cored composite wall structure that has two as molded finished outer gelcoat surfaces, one on the functional side and one on the non-functional side. By "as molded" means that the surfaces are suitable for use as is upon removal from the mold.

The flat panels produced by the above described process provide for easy assembly and shipment. The result is a significantly lower cost cored composite spray booth compared to prior known processes.

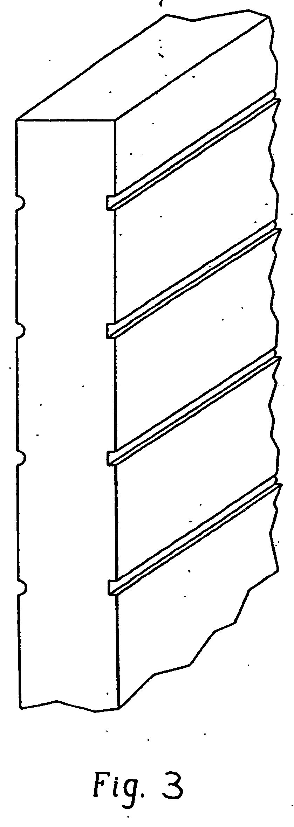

Because the cure times for this process are substantially shortened compared to prior processes, there may not be sufficient time for entrapped air to be ventilated out of the cored composite structure. The core itself is substantially impermeable to air. Entrapped air is undesirable in some applications as it can produce surface irregularities and also can cause overspray powder attraction as well as reduce structural integrity. In order to eliminate this problem, the core 212 may be ventilated to provide air passageways or channels 250 that allow entrapped air to be ventilated. The core may be ventilated, for example, by cutting, thermoforming, pressing or otherwise establishing channels, slits, kerfs or other suitably shaped air passageways in the core surfaces. Resin encapsulating material eventually flows during cure into these core surface channels or kerfs 250. The passageways 250 can be laid out in any desired pattern, with one example being from end to end along the short side of the composite wall. Figure 3 illustrates such an example. A typical kerf may be about 1/16" (0.159cm) wide by 3/32" (0.238cm) depth at one inch center to center spacing, however, these values are only exemplary and may be changed as required for a particular application.

With reference again to Figure 1, the use of composite thermoset resin based wall structures for the spray booth 2 provide various options to form mechanical joints to assemble the booth, particularly when the composite structures are generally flat rectangular walls. Of particular note is that the composite resin walls allow use of two component epoxy resin bonding materials at various lap joints and corner joints. Two component resin based bonding materials are both very low in conductivity and also provide very strong structural bonds, particularly in contrast to solvent based adhesives or thermowelding commonly used with thermoplastic wall structures. Since the composite walls are thermoset resin based structures, preferably although not necessarily the mechanical joint members are made of a thermoset resin that can be resin bonded to the composite wall structures. Alternatively, however, for example, the mechanical joint members may be made of suitable thermoplastic materials with appropriate adhesive technology for bonding the members to the composite walls, although this may in some cases reduce the load bearing properties of the joint. Thermoset resin members will provide exceptional strength at the load bearing mechanical joints.

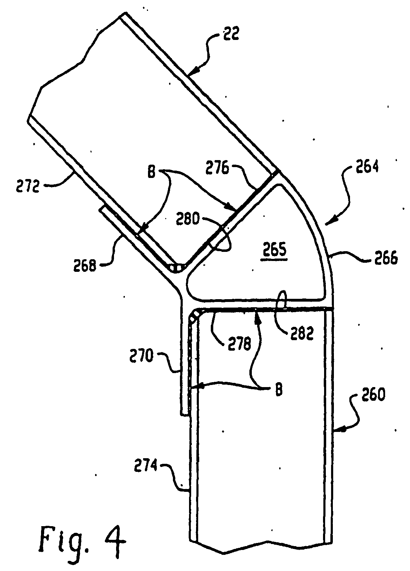

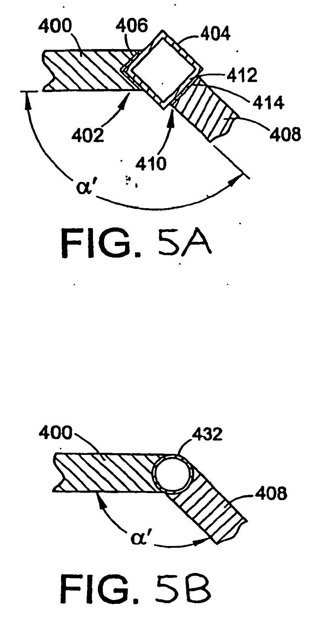

Figures 4 and 5 illustrate various mechanical joint techniques in accordance with the invention for joining the sloped floor panel 22 to a vertical wall portion 260 of the trough or floor duct 24 (area N circled in Figure 1) using two generally flat panels. These angled joints may also be used to form non-rectangular structures such as spray gun vestibules (discussed below).

In Figure 4, a non-conductive pultrusion 264 may be shaped generally as a knee joint. The pultrusion 264 may be made of any suitable non-conductive material such as fiberglass having good structural strength. The knee joint 265 includes a contoured surface 266 on the functional side of the panels 22, 260 to minimize overspray powder entrapment. On the non-functional side, the knee joint 264 includes appropriately angled support legs 268, 270 which are bonded to the outside (non-functional) surfaces 272, 274 of the joined panels 22, 260 respectively. Bonding areas are identified by the letter B and may be bonded, for example, with a two component epoxy resin bonding material or other suitable bonding material. The knee joint 264 also includes bonding surfaces 276, 278 that are bonded to the edges 280, 282 of the panels 22, 260 respectively. The pultruded knee joint 264 may include a hollow channel 284 to reduce material or to provide pressurized air.

Those skilled in the art will readily appreciate that the pultruded knee joint 264, as well as other pultruded support members described herein, may be manufactured by techniques other than pultruding, such as for example, by molding although this would typically be at a higher cost.

The knee joint 264 is contemplated to be a single piece that runs the length of the spray booth 2 along the joint between the joined floor panels 22, 260, however, sectional pieces may also be used as required.

Figs. 5A-5B illustrate alternative embodiments for forming angled joints other than at about 90° or 180°. In Figure 5A, a first composite wall 400 is coped as at 402 and joined to a reinforcing member such as a rectangular hollow pultrusion 404 using an appropriate bonding material such as an epoxy resin layer 406. A second composite wall 408 may be face mounted as at 410 to a side 412 of the pultrusion 404, again using an appropriate bonding material such as an epoxy resin layer 414. The pultrusion 404 is preferably hollow to allow the pultrusion 404 to function as a pressurized air manifold if so desired. The shape of the pultrusion 404 may be selected as required for the required included angle.

Figure 5B illustrates another embodiment in which a round or tubular pultrusion 432 is used. Both edges of the composite walls 400 and 408 are coped as at 434 and 436 and bonded to the tubular pultrusion 432. Any appropriate bonding material may be used such as an epoxy resin. An advantage of the embodiment of Figure 5B is that the included angle α' may be selected at the time the panels 400, 408 are assembled, rather than having to make a pultrusion with a predetermined angle.

It will be noted from Figs. 5A-5B that the structural mechanical joints are formed so that there is no exposed foam core edge of any of the composite wall structures. This is desirable in many applications because the foam core is susceptible to environmental influences such as moisture. Also, when the foam core edge would otherwise be exposed to powder, it would be very difficult to clean.

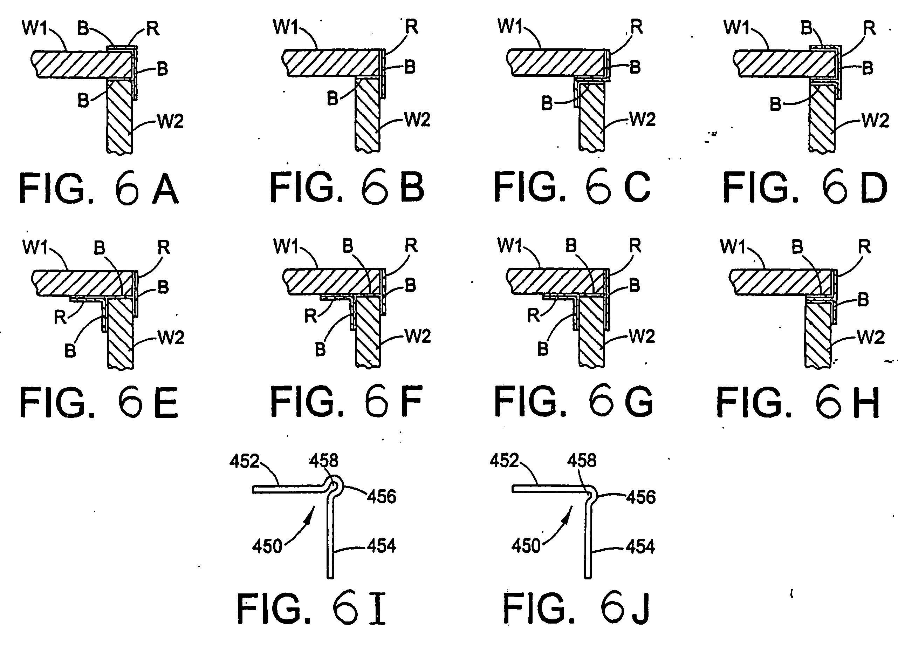

Figs. 6A-6H illustrate a number of the many different configurations that may be used to form 90 degree mechanical joints between two cored composite wall structures W1 and W2 using one or more reinforcing members R. This is by no means intended to be an exhaustive list of the various available options, but rather are provided in an exemplary manner to illustrate how the use of preformed reinforcing members may be used to establish mechanical joints between two cored composite wall structures. The elements may be joined by a suitable bonding material such as for example an epoxy resin B.

In the embodiment of Figure 6A, we have found that sometimes a near 90 degree joint is difficult because when the wall sections are forced into the recess, the edges of the wall cause a flaring of the reinforcing member. This can be exacerbated by hydraulic pressure from the squeezed epoxy resin layer B. Figs. 6I and 6J illustrate an alternative reinforcing member 450 having first and second legs 452, 454 formed at right angles to each other. The legs 452 and 454 are joined by a relief portion 456 which provides a pocket 458 into which the bonding material B may flow. This allows near perfect right angle assembly of the two walls, and also may be used to provide a further reinforcing filler of bonding material at the corner joint.

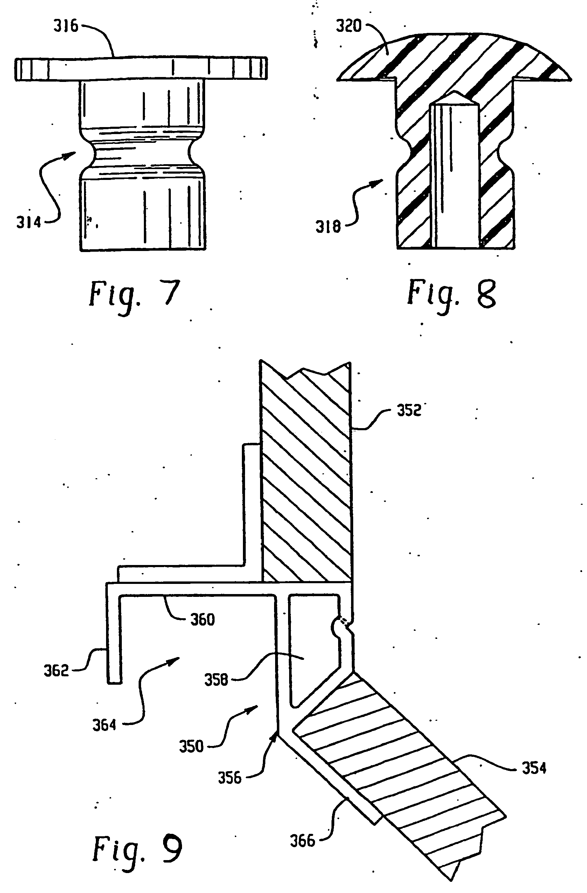

Figure 7 illustrates a load bearing non-conductive bushing 314, such as may be made of glass filled NYLON or DELRIN, for example. The bushing 314 includes an enlarged head 316 and may be used to distribute load stresses against a panel. The bushing 314, for example, may be used in connection with threaded fasteners and through bolts. Figure 8 illustrates a blind tapped mushroom cap bushing 318. The cap 320 forms a smooth surface that minimizes overspray powder retention inside the spray booth 2.

Both the bushing 314 and the bushing 318 include an indentation or other recess 319 formed in the shank 321 of the bushing. When the bushing is installed into a hole formed through a cored composite wall, the bonding resin is applied to the shank 321, especially in the area of the indentation 319. As the resin cures, it strongly bonds to the core but will tend not to bond to the bushing itself. However, the resin will cure into a shape that conforms to the indentation and thus will function as a resin type lock ring to retain the bushing in the wall structure.

Figure 9 illustrates another type of pultrusion 350 that may be used to form an angled mechanical joint between two panels 352 and 354 (corresponding, as an example, to the wall portions 22 and 260 of the spray booth 2). In this example, the pultrusion 350 includes a preferably hollow central body 356 having a passageway 358 therein that may be in fluid communication with a source of pressurized air. Even if pressurized is not used, the hollow body 356 saves weight and material. A first support leg or flange 360 extends from the main body 356 and is bonded or otherwise attached to the vertical booth wall 352. The first support leg may include an extension 362 that in combination with a generally parallel wall 356a of the main body, forms a channel or rail 364. This channel 364 may be used to mount the pultrusion 350 (and the supported walls thereon) onto a booth support frame. An additional angle pultrusion 300 may be used as a brace to further support the vertical wall attachment to the angled joint pultrusion 350. A series of air jets 357 may be formed in the body 356 and appropriately angled so as to direct a flow of air from the air passageway 358 across the functional surface of the booth floor panel 354 to reduce powder collection thereon during a spraying operation.

A second support leg or flange 366 extends from the main body 356 and is bonded or otherwise attached to the sloped floor panel 354.

## Claims

1. An electrostatic powder spray booth comprising a first cored composite wall (22, 400, 416, 352, W₁) and a second cored composite wall (260, 408, 420, 354, W₂), wherein said first and second walls are generally flat panels and are joined to each other along a respective edge to form an included angle, **characterised in that** the booth further comprises a nonconductive member (264, 404, 432, R, 450, 350) that is joined to each of said first and second walls (22, 400, 416, 352, W₁, 260, 408, 420, 354, W₂) to form a mechanical joint therebetween; said nonconductive member (264, 404, 432, R, 450, 350) covering an otherwise exposed edge of core material of at least one of said walls (22, 400, 416, 352, W₁, 260, 408, 420, 354, W₂).

2. The spray booth of claim 1 wherein said nonconductive member (264, 404, 432, R, 450, 350) is resin bonded to each of said first and second walls.

3. The spray booth of claim 1 wherein said nonconductive member (264, 404, 432, R, 450, 350) is bonded to said first and second walls by a two component thermoset resin system.

4. The spray booth of claim 1 wherein said non conductive member (264, 404, 432, R, 450, 350) is attached to said first and second walls by a nonconductive fastener (314, 318).

5. The spray booth of claim 4 wherein said fastener comprises glass.

6. The spray booth of any preceding claim wherein said member (264, 404, 432, R, 450, 350) comprises a fibreglass pultrusion.

7. The spray booth of claim 6 wherein said pultrusion comprises an angle member (264, R, 350).

8. The spray booth of claim 6 wherein said pultrusion comprises a hollow body (264, 356) and two mounting flanges (268, 270, 360, 366) that extend therefrom with each said mounting flange being attached to a respective wall using a two component thermoset resin system.

9. The spray booth of claim 8 wherein said hollow body (356) forms an air passageway (358) therethrough for pressurized air, said pultrusion having at least one air jet (357) for directing pressurized air from said passageway (358) across a surface of one of said walls (352, 354).

## Patentansprüche

1. Sprühkabine für die elektrostatische Pulverbeschichtung mit einer ersten, einen Kern enthaltenden Verbundwand (22, 400, 416, 352, W1) und einer zweiten, einen Kern enthaltenden Verbundwand (260, 408, 420, 354, W2), die als im allgemeinen flache Platten ausgebildet und an entsprechenden Kanten unter Bildung eines eingeschlossenen Winkels miteinander verbunden sind,
**dadurch gekennzeichnet, dass**
die Kabine außerdem ein nicht leitendes Teil (264, 404, 432, R, 450, 350) enthält, das mit jeder der beiden Wände (22, 400, 416, 352, W1; 260, 408, 420, 354, W2) zur Bildung einer dazwischen liegenden mechanischen Verbindung verbunden ist, und dass das nicht leitende Teil (264, 404, 432, R, 450, 350) eine sonst offen liegende Kante von Kernmaterial mindestens einer der Wände (22, 400, 416, 352, W1; 260, 408, 420, 354, W2) abdeckt.

2. Sprühkabine nach Anspruch 1, **dadurch gekennzeichnet, dass** das nicht leitende Teil (264, 404, 432, R, 450, 350) durch Kunstharz mit jeder der beiden Wände verklebt ist.

3. Sprühkabine nach Anspruch 1, **dadurch gekennzeichnet, dass** das nicht leitende Teil (264, 404, 432, R, 450, 350) durch ein durch Wärme aushärtendes Zweikomponenten-Kunstharzsystem mit jeder der beiden Wände verklebt ist.

4. Sprühkabine nach Anspruch 1, **dadurch gekennzeichnet, dass** das nicht leitende Teil (264, 404, 432, R, 450, 350) durch ein nicht leitendes Befestigungsglied (314, 318) an jeder der beiden Wände befestigt ist.

5. Sprühkabine nach Anspruch 4, **dadurch gekennzeichnet, dass** das Befestigungsglied Glass enthält.

6. Sprühkabine nach einem oder mehreren der vorstehenden Ansprüche, **dadurch gekennzeichnet, dass** das Teil (264, 404, 432, R, 450, 350) eine Glasfaser-Pultrusion enthält.

7. Sprühkabine nach Anspruch 6, **dadurch gekennzeichnet, dass** das Pultrusions-Teil ein Winkelglied (264, R, 350) enthält.

8. Sprühkabine nach Anspruch 6, **dadurch gekennzeichnet, dass** das Pultrusions-Teil einen Hohlkörper (264, 356) und zwei sich davon erstreckende Befestigungsflansche (268, 270, 360, 366) enthält, wobei jeder der Befestigungsflansche an einer entsprechenden Wand mittels eines durch Wärme aushärtenden Zweikomponenten-Kunstharzsystems befestigt ist.

9. Sprühkabine nach Anspruch 8, **dadurch gekennzeichnet, dass** der Hohlkörper (356) einen durchgehenden Luftkanal (358) für Druckluft bildet und dass das Pultrusions-Teil mindestens eine Luftdüse (357) zum Blasen von Druckluft über eine Fläche einer der Wände (352, 354) aufweist.

## Revendications

1. Cabine de pulvérisation par poudrage électrostatique comportant une première paroi composite à noyau (22, 400, 416, 352, W₁) et une deuxième paroi composite à noyau (260, 408, 420, 354, W₂), dans laquelle ladite première paroi et ladite deuxième paroi sont généralement des panneaux plats et sont jointes l'une à l'autre le long d'un bord respectif afin de former un angle du filet, **caractérisée en ce que** la cabine comporte par ailleurs un organe non conducteur (264, 404, 432, R, 450, 350) qui est joint à chacune de ladite première paroi et de ladite deuxième paroi (22, 400, 416, 352, W₁, 260, 408, 420, 354, W₂) afin de former un joint mécanique entre elles, ledit organe non conducteur (264, 404, 432, R, 450, 350) couvrant un bord autrement exposé de matériau du noyau d'au moins une desdites parois (22, 400, 416, 352, W₁, 260, 408, 420, 354, W₂).

2. Cabine de pulvérisation selon la revendication 1, dans laquelle ledit organe non conducteur (264, 404, 432, R, 450, 350) est lié par de la résine à chacune de ladite première paroi et de ladite deuxième paroi.

3. Cabine de pulvérisation selon la revendication 1, dans laquelle ledit organe non conducteur (264, 404, 432, R, 450, 350) est lié à ladite première paroi et à ladite deuxième paroi par le biais d'un système à résine thermodurcissable à deux composants.

4. Cabine de pulvérisation selon la revendication 1, dans laquelle ledit organe non conducteur (264, 404, 432, R, 450, 350) est attaché à ladite première paroi et à ladite deuxième paroi par le biais d'une pièce de fixation non conductrice (314, 318).

5. Cabine de pulvérisation selon la revendication 4, dans laquelle ladite pièce de fixation comporte du verre.

6. Cabine de pulvérisation selon l'une quelconque des revendications précédentes, dans laquelle ledit organe (264, 404, 432, R, 450, 350) comporte une pultrusion de fibre de verre.

7. Cabine de pulvérisation selon la revendication 6, dans laquelle ladite pultrusion comporte un organe de type angle (264, R, 350).

8. Cabine de pulvérisation selon la revendication 6, dans laquelle ladite pultrusion comporte un corps creux (264, 356) et deux brides de montage (268, 270, 360, 366) qui se prolongent en provenance de celui-ci, chaque dite bride de montage étant attachée à une paroi respective par l'utilisation d'un système à résine thermodurcissable à deux composants.

9. Cabine de pulvérisation selon la revendication 8, dans laquelle ledit corps creux (356) forme une voie de passage d'air (358) au travers de celui-ci pour de l'air sous pression, ladite pultrusion ayant au moins un jet d'air (357) destiné à diriger de l'air sous pression en provenance de ladite voie de passage (358) en travers d'une surface d'une desdites parois (352, 354).
